# EUROPÄISCHE PATENTSCHRIFT

(11) **EP 1 430 985 B1**
(45) Veröffentlichungstag und Bekanntmachung des Hinweises auf die Patenterteilung: **24.05.2006**
(21) Anmeldenummer: 03104862.2
(22) Anmeldetag: 19.12.2003
(51) Int. Cl.: B23K 11/31, B23K 11/25, B23K 9/20, F15B 11/02, F15B 15/22

(54) **Schweisszange umfassend einen programmierbaren Linearantrieb mit zwei unabhängigen Regelkreisen sowie Verfahren zur Ansteuerung des Linearantriebs solcher Schweisszange**
Welding gun comprising a programmable linear drive with two independent controlling circuits and process for driving the linear drive such a welding gun
Pince de soudage comprenant un entraînement linéaire programmable avec deux boucles indépendantes d'asservissement et procédé de commande de l'entraînement linéaire d'une telle pince de soudage

(30) Priorität: 20.12.2002 DE 10260138
(43) Veröffentlichungstag der Anmeldung: 23.06.2004
(73) Patentinhaber: Rexroth Mecman GmbH, 30453 Hannover (DE)
(72) Erfinder: Meyer, Heinz-Hermann, 30926 Seelze (DE); Tadje, Stefan, 30161 Hannover (DE)
(74) Vertreter: Kietzmann, Lutz

(56) Entgegenhaltungen:
- DE-A- 4 111 106
- US-A- 4 317 980
- US-A- 4 841 113
- US-A- 5 652 488
- PATENT ABSTRACTS OF JAPAN Bd. 1996, Nr. 05, 31. Mai 1996 (1996-05-31) & JP 8 019873 A (NISSAN MOTOR CO LTD), 23. Januar 1996 (1996-01-23)
- PATENT ABSTRACTS OF JAPAN Bd. 1997, Nr. 03, 31. März 1997 (1997-03-31) & JP 8 309552 A (HIROTAKA ENG:KK), 26. November 1996 (1996-11-26)

## Beschreibung

Die Erfindung betrifft eine Schweißzange zur Schweißung von Bauteilen umfassend einen programmierbaren Linearantrieb und ein Verfahren zur Ansteuerung einer Schweißzange mit einem programmierbaren Linearantrieb umfassend einen doppeltwirkenden, mit einem Arbeitskolben ausgestatteten Pneumatikzylinder und einer programmierbaren Druckregeleinheit, umfassend mindestens ein Mehrwegeventil zur beidseitigen Druckmittelbeaufschlagung des Pneumatikzylinders, mindestens einen Sensor zur Messwerterfassung, sowie eine in einem Elektronikgehäuse befindliche Ansteuerelektronik zur Ansteuerung des Mehrwegeventils.

Derartige Schweißzangen mit Linearantrieben kommen üblicherweise in verschiedenen Bereichen der Technik zum Einsatz. Insbesondere finden derartige Schweißzangen weite Verwendung in der Automatisierungstechnik und hier besonders in verschiedensten Fertigungsautomaten. Aufgrund ihrer Vielseitigkeit und guten Steuerungseigenschaften lassen sich Linearantriebe hervorragend in komplexeren Fertigungsautomaten wie in Schweißautomaten einsetzen. Dabei stellen gerade die verschiedenen Verfahrensschritte beim Schweißen hohe Anforderungen an den Linearantrieb.

Allgemein sind Verfahren zur Ansteuerung von Schweißzangen mit Linearantrieben bekannt. Insbesondere zur Ansteuerung von Schweißrobotern sind entsprechende Verfahren bekannt. Diese Verfahren sehen in der Regel einen schnellen Eilhub und einen langsamen Tasthub vor, wobei der Arbeitsraum über einen Regelkreis gesteuert wird.

Nachteilig an diesen Verfahren ist, dass meist nur vorbestimmte Verfahrensschritte eingestellt werden können und somit keine optimale Anpassung bei komplexen und anspruchsvollen Anforderungen stattfinden kann.

Aus der Japan patent abstract JP 8019873, die als nächsliegender Stand der Technik angesehen wird, ist eine pneumatische Ansteuerung eines Zylinders bekannt, bei welcher Servoventile verwendet werden. Dabei wird der Zylinder geschwindigkeitsregelnd angesteuert. Eine sensorische Druckabfrage ist hierbei nicht vorgesehen, wodurch nur unzureichend Parameter erfasst werden um eine zeitoptimierte zielgenaue Ansteuerung zu erhalten.

Aus der DE 100 07 838 A1 ist ein oberbegriffliches Verfahren zur Ansteuerung einer Bolzenschweißvorrichtung mit programmierbaren Linearantrieben bekannt. Das Verfahren sieht dabei folgende Schritte vor: Der Linearantrieb verfährt die Schweißachse mit einer sehr hohen Geschwindigkeit nahe an das Werkstück. Mit einer geringeren Tastgeschwindigkeit wird der Schweißbolzen bis zur Berührung mit dem Werkstück herangefahren, wodurch die Position des Werkstücks ermittelt wird. Nach dem Abheben und Verschweißen wird die Schweißachse mit der Maximalgeschwindigkeit des Linearantriebs zurück in die Ausgangsstellung bewegt. Bei der bekannten Lösung tritt der Nachteil auf, dass der pneumatische Antrieb nicht frei programmierbar, sondern nur stufenweise entsprechend festeingestellter Vorgaben programmierbar ist. In der bekannten Lösung werden nur wenige Verfahrgeschwindigkeiten wie die Eilhubgeschwindigkeit, die Maximalgeschwindigkeit und die Tastgeschwindigkeit bereitgestellt. Eine Drucksteuerung wird nicht bereitgestellt. Zudem ist das bereitgestellte Verfahren nur mit elektrischen Antrieben einsetzbar.

Eine Aufgabe der Erfindung ist es deshalb, ein Verfahren bereitzustellen, welches eine verbesserte Ansteuerung eine Schweißzange mit Linearantrieb zum Einsatz für komplexe Aufgaben zulässt, wobei der Linearantrieb druckmittelbetätigbar, insbesondere pneumatisch betätigbar ist.

Allgemein sind Schweißzangen mit Linearantrieben hydraulischer, pneumatischer und elektrischer Bauart bekannt. Dabei lassen sich druckmittelbetätigte Linearantriebe oft mehrstufig entsprechend voreingestellten Werten regeln.

Nachteilig an dem Stand der Technik ist, dass eine freie Programmierung nicht möglich ist.

Elektrische Linearantriebe für Schweißzangen verfügen über eine freie Programmierung, sind jedoch relativ großbauend und schwer und benötigen zudem externe Schaltschränke.

Aus der DE 41 11 106 A1 ist eine Mehrdruck-Steueranlage für eine Gegendruck-Schweißpistole oder für ähnliche Vorrichtungen bekannt. Diese weist ein Positionier-Wegeventil zum Steuern des Ausfahrens und Zurückziehens des Positionier- oder Gegendruckzylinders und eine Mehrdruck-Luft-Folgeschaltung vorgesehen. Diese Mehrdruck-Luft-Folgeschaltung weist eine Vielzahl von voreingestellten Drücken zum Ausführen von Schweißoperationen bei wählbaren Drücken und in wählbarer Abfolge auf.

Nachteilig an der bekannten Lösung ist, dass nur aus einer begrenzten und diskret verteilten Anzahl von Druckstufen gewählt werden kann, welche sich über eine Folgesteuerung zeitgesteuert einstellen lassen, wodurch die Lösung komplex aufgebaut und großbauend ist und eine optimale freie Programmierung entsprechend den komplexen Anforderungen, die an eine Schweißzange mit Linearantrieb gestellt werden, nicht möglich ist.

Eine zweite Aufgabe der Erfindung ist es deshalb, eine mittels einem pneumatischen Linearantrieb frei programmierbare Schweißzange bereitzustellen, die leicht und kleinbauend ausgebildet ist und deren Regelungseinheit sich in den Linearantrieb integrieren lässt um komplexe Schweißaufgaben zu erfüllen.

Die Aufgabenstellung wird ausgehend von einer Schweißzange gemäß dem Anspruch 1 gelöst. Vorteilhafte Weiterbildungen der Erfindung sind in den abhängigen Ansprüchen angegeben. Die Erfindung definiert auch ein Verfahren zum Ansteuerung einer solchen Schweißzunge gemaß Anspruch 7.

Die Erfindung schließt die technische Lehre ein, dass die Druckregeleinheit mindestens zwei voneinander unabhängige Regelkreise zur Druckmittelbeaufschlagung zweier durch den Arbeitskolben getrennter Arbeitsräume des Pneumatikzylinders aufweist, um eine stufenlose Bewegung des Arbeitskolbens zu realisieren, wobei die Regelkreise über mindestens zwei unabhängige Mehrwegeventile als Stellglieder die Druckmittelbeaufschlagung regeln.

Diese Lösung bietet den Vorteil, dass sich über die beiden unabhängigen Regelkreise der Kolben sich beliebig frei programmieren lässt, wobei die Druckregeleinheit aufgrund der pneumatischen Bauart leicht in den Linearantrieb integrierbar ist. Insbesondere ermöglicht die freie Programmierung über zwei unabhängige Regelkreise, dass der Hub eines Linearantriebs in Zwischenpositionen stoppt, beispielsweise bei 50% des Hubwegs. Es kann aufgrund der freien Programmierung ebenfalls ein Kammerdruck des Linearantriebs konstant gehalten werden und der Hub nur in Abhängigkeit von dem zweiten Kammerdruck bewirkt werden.

Eine die Erfindung Maßnahme ist, dass die Druckregeleinheit mindestens zwei Mehrwegeventile umfasst, wobei die Mehrwegeventile voneinander unabhängige 3/3 - Wege Druckregelventile sind. Auf diese Weise lassen sich in der Druckregeleinheit standardisierte Mehrwegeventile verwenden, wodurch eine zuverlässige Regelung gewährleistet ist.

Vorzugsweise sind die Druckregelventile elektro-pneumatische Proportionalventile.
Um einen modularen Aufbau des Linearantriebs zu gewährleisten, ist es vorteilhaft, dass die Mehrwegeventile über eine Ventilplatte in den Linearantrieb integrierbar sind, wobei die Ventilplatte mit dem Pneumatikzylinder verbunden ist.

Zur optimalen Regelung ist es vorteilhaft, wenn die Ansteuerelektronik der Druckregelung einen übergeordneten Mikroprozessor sowie eine programmierbare Speichereinheit zur Programmierung des Linearantriebs aufweist. Damit kann ein automatischer Soll-Ist-Vergleich vorgenommen werden, ohne das manuell eingegriffen wird.

Insbesondere ist es vorteilhaft, dass die Ansteuerelektronik Mittel zur Wahl der Betriebsart der Schweißzange beziehungsweise des Linearantriebs aufweist, wobei die Betriebsarten Weg-, Geschwindigkeits- und/oder Druckregelung wählbar sind. Auf diese Weise können die komplexen Anforderungen, die an die Schweißzange gestellt werden, berücksichtigt werden, so dass eine optimale Automatisierung realisiert ist.

Dabei ist eine die Erfindung verbessernde Maßnahme, dass der Mikroprozessor Mittel aufweist, um die Soll- und Istwerte in Analog- und/oder Bus-Technik zu verarbeiten. Somit lassen sich die am häufigsten eingesetzten Technologien verwenden.

Um einen automatisierten Soll-Istwert-Vergleich vorzunehmen, offenbart die Schweißzange dass ein Sensor der Druckregeleinheit als ein Weg-, Kraft- und/oder Geschwindigkeitsmess-Sensor zur Erfassung des entsprechenden Ist-Werts des Arbeitskolbens ausgebildet ist. Auf diese Weise lässt sich eine automatisierte Regelung realisieren.

Vorzugsweise ist eine erfindungsgemäße Schweißzange mit einem Linearantrieb zum Einsatz in komplexen beziehungsweise als komplexer Fertigungsautomaten konzipiert. Eine komplexe Aufgabe stellt das automatisierte Schweißen von Bauteilen da. Aus diesem Grund ist es eine weitere Aufgabe der Erfindung eine Schweißzange bereitzustellen, die frei programmierbare Linearantriebe verwendet.

Vorzugsweise wird eine Schweißzange zur Schweißung von Bauteilen mit einem programmierbaren Linearantrieb, welcher die Elektroden der Schweißzange positioniert und führt, bereitgestellt. Durch die freie Programmierung des Linearantriebs lassen sich mit dieser Schweißzange selbst hoch komplexe Schweißaufgaben zuverlässig bewältigen.

Dazu sind entsprechende Verfahren zur Ansteuerung einer Schweißzange mit einem programmierbaren Linearantrieb notwendig. Insbesondere werden mehrstufige und/oder zyklisches Verfahren zur Ansteuerung eines Schweißzylinders benötigt, wobei ein Verfahrenszyklus variable Kolbenpositionen, variable Geschwindigkeitsverläufe und/oder variable Zylinderdrücke aufweist.

Eine besondere Ausführungsform des erfindungsgemäßen Verfahrens sieht vor, dass der in einem ersten Arbeitsraum beaufschlagte Druck und der in einem zweiten Arbeitsraum beaufschlagte Druck getrennt voneinander über unabhängige Regelkreise gesteuert wird,
wobei der Druck in einer der beiden Arbeitsräume während des gesamten Verfahrens konstant gehalten wird. So lässt sich neben einer variablen und freien Programmierung und damit einem optimierten Linearantriebseinsatz eine deutliche Zeitersparnis erzielen.

Insbesondere lässt sich ein Vorteil dadurch erzielen, dass der Druck des zweiten Arbeitsraums des Zylinders während des gesamten Verfahrens konstant gehalten wird. Damit wird eine Bewegung des Kolbens durch Druckbeaufschlagung eines Arbeitsraums erreicht, wobei der zweite Arbeitsraum aufgrund des konstanten Druckes und der kompressiblen Eigenschaften der Luft als Dämpfungselement fungiert.

Eine weitere Zeitersparnis lässt sich dadurch realisieren, dass bei einem Vollhub oder mehreren Teilhüben des Arbeitskolbens der Druck in dem Arbeitsraum, der zu Beginn des gerade auszuführenden Hubs das größere Volumen aufweist, konstant gehalten wird. Dadurch wird stets der Arbeitsraum mit dem geringeren Volumen entsprechend der Vorgaben verändert, wodurch eine minimale Luftzufuhr benötigt wird.

Vorzugsweise umfasst das Verfahren beziehungsweise ein Verfahrenszyklus die folgenden Schritte:
Aufsetzen, Vorspannen, Schweißen, Halten und Öffnen. Somit lässt sich ein kompletter Schweißvorgang mit dem erfindungsgemäßen Verfahren realisieren.

Weiterhin vorteilhaft ist es, dass bei der Regelung zwischen mehreren Betriebsarten umfassend Positionsregelung, Geschwindigkeitsregelung und Kraftregelung, gewählt werden kann.

Dementsprechend ist es von Vorteil, dass innerhalb eines Verfahrenszyklus zwischen den verschiedenen Betriebsarten gewechselt wird. So kann die Lineareinhe it flexibel entsprechend den verschieden Aufgaben programmiert werden und sich eine optimale Ansteuerung realisieren.

Vorzugsweise sind die einzelnen Verfahrensschritte mittels geeigneter Betriebsarten zu programmieren. So ist es vorteilhaft, dass der Verfahrensschritt Aufsetzen mittels Positionsregelung geregelt wird, der Verfahrensschritt Vorspannen mittels Geschwindigkeitsregelung geregelt wird und der Verfahrensschritt Schweißen und/oder der Verfahrensschritt Halten mittels Kraftregelung geregelt wird. So ist für jeden Verfahrensschritt die optimale Regelung möglich.

Weitere die Erfindung verbessernde Maßnahmen sind in den Unteransprüchen angegeben oder werden nachstehend gemeinsam mit der Beschreibung eines bevorzugten Ausführungsbeispiels der Erfindung anhand der Figur näher dargestellt. Es zeigt:
- Fig.1: eine teilweise geschnittene Seitenansicht eines Linearantriebs einer erfindungsgemäßen Schweißzange,
- Fig.2: einen Verfahrenszyklus zur Steuerung eines positionierbaren Schweißzylinders mit einem Linearantrieb.

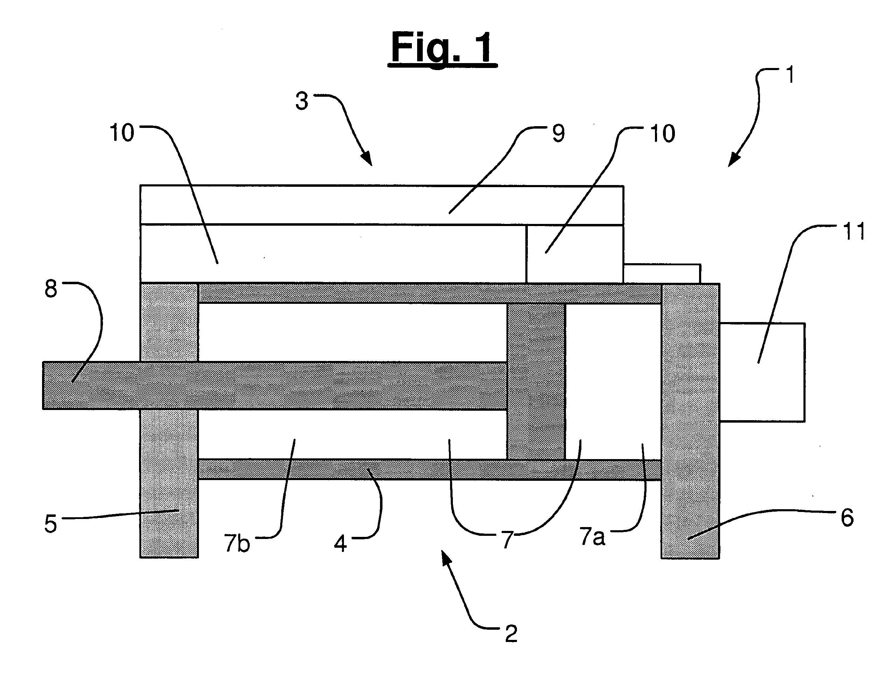

Der Linearantrieb 1 nach Fig.1 besteht aus einem Pneumatikzylinder 2 und einer daran angeordneten Druckregeleinheit 3. Der im Schnitt schematisch dargestellte Pneumatikzylinder 2 ist ein doppeltwirkender, mit Luft als Druckmittel beaufschlagter Arbeitszylinder, der aus einem Zylindergehäuse, welches ein Zylinderrohr 4, einen Zylinderdeckel 5 und einen Zylinderboden 6 umfasst, und einem in einem durch das Zylindergehäuse begrenzten Arbeitsraum 7 beweglich angeordneten Arbeitskolben 8 besteht. Der Arbeitskolben 8 durchdringt den Zylinderdeckel 5 und teilt den Arbeitsraum 7 in einen ersten Arbeitsraum 7a und einen zweiten Arbeitsraum 7b. Der erste Arbeitsraum 7a befindet sich zwischen Zylinderboden 6 und Arbeitskolben 8, der zweite Arbeitsraum 7b befindet sich zwischen Arbeitskolben 8 und Zylinderdeckel 5. Jeder der Arbeitsräume 7a, 7b ist durch eine Zufuhröffnung (nicht dargestellt) mit mindestens einem Druckmittelleitungssystem (ebenfalls nicht dargestellt) verbunden. Über dieses lassen sich die Arbeitsräume 7a, 7b mit Druckmittel, in dem vorliegenden Ausführungsbeispiel mit Luft, beaufschlagen. Die Regelung der Druckmittelbeaufschlagung übernimmt die Druckregeleinheit 3, welche schematisch dargestellt ist.

Die Druckregeleinheit nach Fig. 1 umfasst eine in einem Elektronikgehäuse 9 untergebrachte Ansteuerelektronik mit mindestens einem Mikroprozessor und mindestens einer Speichereinheit (beide nicht dargestellt), eine Ventilplatte 10 mit Ventilen und einen Sensor 11. Der Sensor 11 misst die Position des Arbeitskolbens 8, die Geschwindigkeit und den in den beiden Arbeitsräumen 7a, 7b herrschenden Druck. Diese Werte übermittelt der Sensor 11 an die Ansteuerelektronik. In der Ansteuerelektronik erfolgt über den Speicher und den Mikroprozessor ein Soll-Ist-Vergleich der gemessenen und der vorgegebenen Werte. Die Ansteuerelektronik ist so ausgelegt, dass die Verarbeitung der Daten sowohl in Analog als auch in Bus-Technik erfolgen kann. Je nach Ergebnis des Soll-Ist-Vergleichs erfolgt die Ansteuerung der Ventile. In der in Fig. 1 beschriebenen Ausführungsform weist die Ventilplatte 10 zwei 3/3-Wegeventile auf, welche als elektro-pneumatische Druckregelventile ausgebildet sind. Zusätzlich weist die Ventilplatte 10 noch Fail safe-Ventile auf, die insbesondere bei Funktionsstörungen eingreifen. Die Ansteuereinheit lässt sich über die Speichereinheit, welche eine Schnittstelle zu Dateneingabegeräten aufweist, frei programmieren.

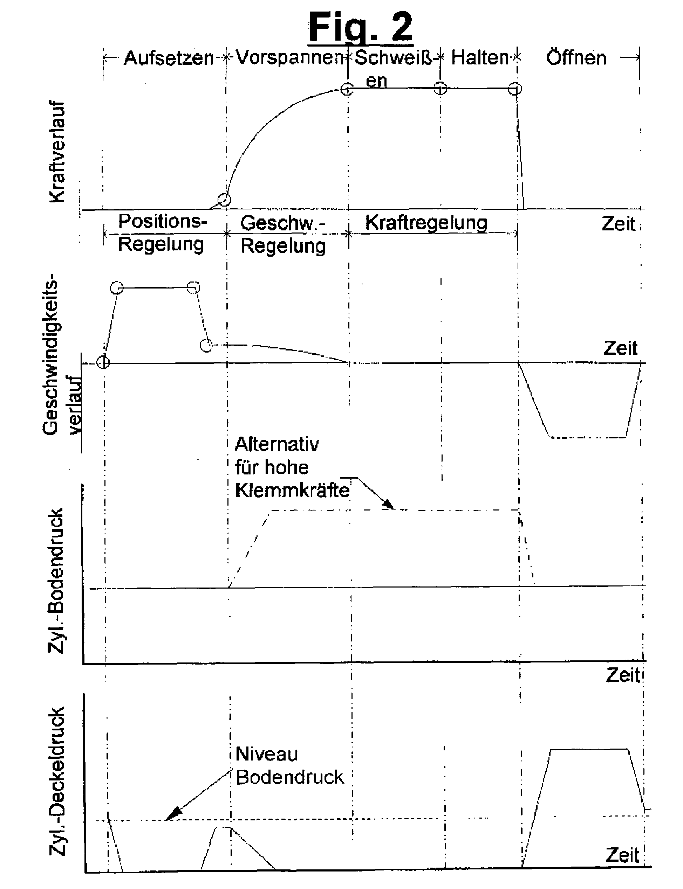

Fig.2 zeigt die verschiedenen Verfahrensschritte eines positionierbaren Schweißzylinders. Das Verfahren umfasst dabei die Verfahrensschritte:
- Aufsetzen,
- Vorspannen,
- Schweißen,
- Halten und
- Öffnen.

Diese Abfolge von Verfahrensschritten bildet einen Zyklus. Das Verfahren sieht mehrere Betriebsarten der Regelung vor. In dem erfindungsgemäßen Ausführungsbeispiel sind die folgenden Betriebsarten vorgesehen:
- Positionsregelung,
- Geschwindigkeitsregelung und
- Kraftregelung

In Fig. 2 sind nun verschiedene Diagramme gezeigt, wobei bei allen Diagrammen die horizontale Achse beziehungsweise die Ordinate die Zeitachse darstellt. Diese ist in fünf Abschnitte entsprechend dem Verlauf bei einem Schweißvorgang untergliedert. Diese Abschnitte sind in der zeitlichen Abfolge Aufsetzen, Vorspannen, Schweißen, Halten und Öffnen. Auf der vertikalen Achse oder der Abszisse sind die unterschiedlichen Kenngrößen der verschiedenen Betriebsarten aufgeführt. Das oberste Diagramm stellt den Kraftverlauf, das darrunterliegende Diagramm den Geschwindigkeitsverlauf, das darrunterliegende Diagramm den Zylinderbodendruckverlauf und das unterste Diagramm den Zylinderdeckeldruckverlauf über die Zeitachse gesehen dar. Das Aufsetzten erfolgt prinzipiell in der Betriebsart Positionsregelung, wohingegen das Vorspannen in der Betriebsart Geschwindigkeitsregelung und das Schweißen und Halten in der Betriebsart Kraftregelung erfolgt. Das Öffnen schließlich erfolgt ohne Regelung.

Anhand der Diagramme ist zu sehen, dass während des Aufsetzvorgangs der Kraftverlauf minimal gegen Ende des Verfahrensschritt linear ansteigt. Der Geschwindigkeitsverlauf in diesem Abschnitt steigt linear schnell auf einen Maximalwert, bleibt fast die gesamte Zeit über konstant auf diesem Wert und sinkt linear schnell auf einen niedrigeren Wert nahe 0 ab. Bei Erreichen dieses Wertes beginnt der Anstieg des Kraftverlaufs, wohingegen der Geschwindigkeitsverlauf konstant bleibt. Der Zylinderbodendruck bleibt über alle Abschnitte konstant. Der Zylinderdeckeldruck sinkt hingegen in diesem Abschnitt schnell linear auf 0, wo er bis zum Absinken der Geschwindigkeit bleibt. Mit abfallender Geschwindigkeit steigt der Zylinderdeckeldruck auf einen Wert der etwas unter dem Ausgangswert liegt. Mit einsetzendem Anstieg des Kraftverlaufs bleibt der Zylinderdeckeldruck konstant.

Mit dem nächsten Zeitabschnitt erfolgt der Verfahrensabschnitt Vorspannen. Hier steigt der Kraftverlauf nichtlinear bis zu einem Maximalwert an. Die Geschwindigkeit fällt nichtlinear auf 0 ab. Der Zylinderbodendruck bleibt weiterhin konstant, kann aber für hohe Klemmkräfte linear auf einen Maximalwert ansteigen und dort bis zum Öffnen gehalten werden. Der Zylinderdeckeldruck fällt linear auf 0 ab und bleibt auf diesem Wert. Im nächsten Verfahrensschritt, dem Schweißen, bleiben alle Verläufe auf dem letzten Wert des Abschnitts Vorspannen.

Mit dem letzten Verfahrensschritt des Verfahrenszyklus erreichen alle Werte wieder ihren Anfangswert. Der Kraftverlauf fällt sehr schnell auf 0 ab. Der Geschwindigkeitsverlauf steigt zunächst schnell linear auf einen Maximalwert an, ist jedoch im Vergleich zur Aufsetzgeschwindigkeit in die entgegengesetzte Richtung gerichtet. Auf diesem Wert verharrt der Geschwindigkeitsverlauf bis kurz vor Erreichen der Ausgangsposition. Die Geschwindigkeit fällt dann bis zum Ausgangspunkt schnell linear auf 0. Der Zylinderbodendruck bleibt weiter konstant. Für den Fall, dass alternativ für hohe Klemmkräfte auf einen höheren Druck geregelt wurde, fällt dieser schnell linear auf den Ausgangsdruck ab. Der Zylinderdeckeldruck steigt linear auf einen absoluten Maximalwert der nahezu während der gesamten Öffnung konstant bleibt. Kurz vor Ende des Öffnungsvorgangs fällt der Zylinderdeckeldruck schnell linear auf den Ausgangswert.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- **1**: Linearantrieb (programmierbar)
- **2**: Pneumatikzylinder
- **3**: Druckregeleinheit
- **4**: Zylinderrohr
- **5**: Zylinderdeckel
- **6**: Zylinderboden
- **7**: Arbeitsraum
- **7 a**: erster Arbeitsraum
- **7 b**: zweiter Arbeitsraum
- **8**: Arbeitskolben
- **9**: Elektronikgehäuse
- **10**: Ventilplatte
- **11**: Sensor

## Patentansprüche

1. Schweißzange zur Schweißung von Bauteilen umfassend einen programmierbaren pneumatischen Linearantrieb (1), welcher die Elektroden der Schweisszange positioniert, umfassend einen doppeltwirkenden, mit einem Arbeitskolben (8) ausgestatteten Pneumatikzylinder (2) und einer programmierbaren Druckregeleinheit (3), umfassend mindestens ein Mehrwegeventil zur beidseitigen Druckmittelbeaufschlagung des Pneumatikzylinders (2), mindestens einen Sensor (11) zur Messwerterfassung, über den sowohl die Position, als auch die Geschwindigkeit des Kolbens, als auch den in beiden Arbeitsräumen herrschenden Druck messbar ist und in die Regelung mit eingeht, sowie eine in einem Elektronikgehäuse (9) befindliche Ansteuerelektronik zur Ansteuerung des Mehrwegeventils,
wobei die Druckregeleinheit (3) mindestens zwei voneinander unabhängige Regelkreise zur Druckmittelbeaufschlagung zweier durch den Arbeitskolben (8) getrennter Arbeitsräume (7a, 7b) des Pneumatikzylinders (2) aufweist, um eine stufenlose Bewegung des Arbeitskolbens (8) zu realisieren, wobei die Regelkreise über zwei unabhängige Mehrwegeventile als Stellglieder die Druckmittelbeaufschlagung regeln, welche als voneinander unabhängige 3/3-Wege Druckregelventile ausgebildet sind.

2. Schweißzange nach Anspruch 1
**dadurch gekennzeichnet,**
**dass** die Druckregelventile elektro-pneumatische Proportionalventile sind.

3. Schweißzange nach einem der vorherigen Ansprüche,
**dadurch gekennzeichnet, dass** die Mehrwegeventile über eine Ventilplatte (10) in den Linearantrieb (1) integriert sind, wobei die Ventilplatte (10) mit dem Pneumatikzylinder (2) verbunden ist.

4. Schweißzange nach einem der vorherigen Ansprüche,
**dadurch gekennzeichnet, dass** die Ansteuerelektronik der Druckregelung (3) einen übergeordneten Mikroprozessor sowie eine programmierbare Speichereinheit zur Programmierung des Linearantriebs (1) aufweist.

5. Schweißzange nach einem der vorherigen Ansprüche,
**dadurch gekennzeichnet, dass** die Ansteuerelektronik Mittel zur Wahl der Betriebsart des Linearantriebs (1) aufweist, wobei die Betriebsarten Weg-, Geschwindigkeits- und/oder Druckregelung wählbar sind.

6. Schweißzange nach einem der vorherigen Ansprüche,
**dadurch gekennzeichnet,**
**dass** der Mikroprozessor Mittel aufweist, um die Soll- und Istwerte in Analog- und/oder Bus-Technik zu verarbeiten.

7. Verfahren zur Ansteuerung einer Schweißzange mit einem programmierbaren Linearantrieb (1) gemäß den Ansprüchen 1 bis 6, insbesondere mehrstufiges und/oder zyklisches Verfahren zur Ansteuerung eines Schweißzylinders, wobei ein Verfahrenszyklus variable Kolbenpositionen, variable Geschwindigkeitsverläufe und/oder variable Zylinderdrücke aufweist,
wobei der in einem ersten Arbeitsraum (7a) beaufschlagte Druck und der in einem zweiten Arbeitsraum (7b) beaufschlagte Druck getrennt voneinander über unabhängige Regelkreise gesteuert werden, wobei der Druck in einer der beiden Arbeitsräume während des gesamten Verfahrens konstant gehalten wird.

8. Verfahren zur Ansteuerung einer Schweißzange mit einem programmierbaren Linearantrieb (1) nach Anspruch 7., **dadurch gekennzeichnet,**
**dass** der Druck des ersten Arbeitsraums (7a) des Zylinders während des gesamten Verfahrens konstant gehalten wird.

9. Verfahren zur Ansteuerung einer Schweißzange mit einem programmierbaren Linearantrieb (1) nach Anspruch 8., **dadurch gekennzeichnet,**
**dass** bei einem Vollhub oder mehreren Teilhüben des Arbeitskolbens (8) der Druck in dem Arbeitsraum (7), der zu Beginn des gerade auszuführenden Hubs das größere Volumen aufweist, konstant gehalten wird.

10. Verfahren zur Ansteuerung einer Schweißzange mit einem programmierbaren Linearantrieb (1) nach Anspruch 8 bis 9
**dadurch gekennzeichnet, dass** das Verfahren ein Verfahrenszyklus die folgenden Schritte umfasst:
Aufsetzen der Schweißelektroden auf die zu schweißenden Bauteile,
Vorspannen der Bauteile
Schweißen der Bauteile mit anschließendem
Öffnen, wobei
bei der Regelung zwischen mehreren Betriebsarten umfassend
Positionsregelung,
Geschwindigkeitsregelung und
Kraftregelung
gewählt wird.

11. Verfahren zur Ansteuerung einer Schweißzange mit einem programmierbaren Linearantrieb (1) nach einem der Ansprüche 8 bis 10 **dadurch gekennzeichnet,**
**dass** innerhalb eines Verfahrenszyklus zwischen den verschiedene Betriebsarten gewechselt wird.

12. Verfahren zur Ansteuerung einer Schweißzange mit einem programmierbaren Linearantrieb (1) nach einem der Ansprüche 8 bis 9 **dadurch gekennzeichnet,**
**dass** der Verfahrensschritt Aufsetzen mittels Positionsregelung geregelt wird.

13. Verfahren zur Ansteuerung einer Schweißzange mit einem programmierbaren Linearantrieb (1) nach einem der Ansprüche 8 bis 12
**dadurch gekennzeichnet,**
**dass** der Verfahrensschritt Vorspannen mittels Geschwindigkeitsregelung geregelt wird.

14. Verfahren zur Ansteuerung einer Schweißzange mit einem programmierbaren Linearantrieb (1) nach einem der Ansprüche 8 bis 13, d**adurch gekennzeichnet,**
**dass** der Verfahrensschritt Schweißen mittel Kraftregelung geregelt wird.

## Claims

1. A welding clamp for welding components, comprising a programmable pneumatic linear drive (1) which positions the electrodes of the welding clamp, comprising a double-acting pneumatic cylinder (2) having a work piston (8), and a programmable pressure control unit (3) comprising at least one multiport valve for applying a pressurized medium to either side of the pneumatic cylinder (2), at least one sensor (11) for measuring value acquisition and by which both the position and the speed of the piston and the pressure present in the two work chambers is measurable and is used in the closed-loop control process, and a drive electronics arranged in an electronics housing (9) for driving the multiport valve,
wherein the pressure control unit (3) has at least two independent control loops for applying pressurized fluid to two work chambers (7a, 7b) of the pneumatic cylinder (2) separated from each other by the working piston (8), in order to implement a continuous movement of the working piston (8),
wherein the control loops control the application of pressurized fluid by means of two independent multiport valves as actuators, which are formed as two independent three-way, three-position pressure regulating valves.

2. The welding clamp according to claim 1,
**characterised in that** the pressure regulating valves are electro-pneumatic proportional valves.

3. The welding clamp according to any one of the preceding claims,
**characterised in that** the multiport valves are incorporated in the linear drive (1) by means of a valve plate (10), wherein the valve plate (10) is connected to the pneumatic cylinder (2).

4. The welding clamp according to any one of the preceding claims,
**characterised in that** the drive electronics of the closed-loop pressure control (3) has a master microprocessor and a programmable memory unit for programming the linear drive (1).

5. The welding clamp according to any one of the preceding claims,
**characterised in that** the drive electronics includes means for selecting the operating mode of the linear drive (1), wherein the operating modes of closed-loop path, speed or pressure control are selectable.

6. The welding clamp according to any one of the preceding claims,
**characterised in that** the microprocessor includes means for processing the setpoint and actual values in analog and/or bus technology.

7. A method of driving a welding clamp having a programmable linear drive (1) according to any one of claims 1 to 6, in particular a multi-step and/or cyclic method of driving a welding cylinder, wherein an operational cycle has variable piston positions, variable speed behaviour and/or variable cylinder pressures,
wherein the pressure applied in a first work chamber (7a) and the pressure applied in a second work chamber (7b) are controlled separately via independent control loops, wherein the pressure in one of the two work chambers is maintained constant during the entire process.

8. The method of driving a welding clamp having a programmable linear drive (1) according to claim 7, **characterised in that**
the pressure of the first work chamber (7a) of the cylinder is maintained constant during the entire process.

9. The method of driving a welding clamp having a programmable linear drive (1) according to claim 8, **characterised in that**
with a full stroke or with a plurality of partial strokes of the working piston (8) the pressure in the work chamber (7), which has the greater volume at the beginning of the stroke currently to be carried out, is maintained constant.

10. The method of driving a welding clamp having a programmable linear drive (1) according to any one of claims 8 to 9,
**characterised in that** the method comprises the following steps:
placing the welding electrodes in contact with the components to be welded, pre-stressing the components,
welding the components, followed by
opening, wherein,
during the closed-loop control, a selection is made from a plurality of operating modes comprising
positional control,
speed control, and
force control.

11. The method of driving a welding clamp having a programmable linear drive (1) according to any one of claims 8 to 10, **characterised in that**
within a process cycle a changeover is made between the different operating modes.

12. The method of driving a welding clamp having a programmable linear drive (1) according to any one of claims 8 to 11, **characterised in that**
the step of placing is closed-loop controlled by means of a positional control.

13. The method of driving a welding clamp having a programmable linear drive (1) according to any one of claims 8 to 12, **characterised in that**
the step of pre-stressing is closed-loop controlled by means of a speed control.

14. The method of driving a welding clamp having a programmable linear drive (1) according to any one of claims 8 to 13, **characterised in that**
the step of welding is closed-loop controlled by means of a force control.

## Revendications

1. Pince porte-électrodes pour souder des composants, comportant un entraînement linéaire pneumatique programmable (1) qui positionne les électrodes de la pince porte-électrodes, comportant un vérin pneumatique (2) à double effet muni d'un piston de travail (8) et une unité de régulation de pression programmable (3), comportant au moins un distributeur à plusieurs voies pour l'alimentation bilatérale du vérin pneumatique (2) en fluide sous pression, au moins un capteur (11) pour l'acquisition de valeurs de mesure, qui permet de mesurer aussi bien la position que la vitesse du piston et également la pression régnant dans les deux chambres de travail qui sont prises en compte lors de la régulation, ainsi qu'une unité de pilotage électronique situé dans un boîtier électronique (9) et destinée à piloter le distributeur,
dans laquelle l'unité de régulation de pression (3) comprend au moins deux circuits de régulation indépendants l'un de l'autre pour l'alimentation en fluide sous pression des deux chambres de travail (7a, 7b) du vérin pneumatique (2) séparées par le piston de travail (8), afin de réaliser un mouvement en continu du piston de travail (8), les circuits de régulation régulant l'alimentation en fluide sous pression via deux distributeurs indépendants à titre d'organes de réglage, qui sont réalisés sous la forme de valves de régulation de pression à 3 voies/3 positions indépendantes l'une de l'autre.

2. Pince porte-électrodes selon la revendication 1, **caractérisée en ce que** les valves de régulation de pression sont des valves proportionnelles électropneumatiques.

3. Pince porte-électrodes selon l'une des revendications précédentes, **caractérisée en ce que** les distributeurs sont intégrés dans l'entraînement linéaire (1) via une plaque de valve (10), la plaque de valve (10) étant reliée au vérin pneumatique (2).

4. Pince porte-électrodes selon l'une des revendications précédentes, **caractérisée en ce que** l'unité de pilotage électronique de la régulation de pression (3) comprend un microprocesseur maître ainsi qu'une unité de mémorisation programmable pour programmer l'entraînement linéaire (1).

5. Pince porte-électrodes selon l'une des revendications précédentes, **caractérisée en ce que** l'unité de pilotage électronique comprend des moyens pour sélectionner le type de fonctionnement de l'entraînement linéaire (1) parmi des types de fonctionnement sélectionnables que sont la régulation de course, de vitesse et/ou de pression.

6. Pince porte-électrodes selon l'une des revendications précédentes, **caractérisée en ce que** le microprocesseur comprend des moyens pour traiter les valeurs de consigne et les valeurs réelles par des moyens techniques analogiques et/ou par des moyens à bus.

7. Procédé pour piloter une pince porte-électrodes pourvue d'un entraînement linéaire programmable (1) selon l'une des revendications 1 à 6, en particulier procédé à plusieurs étages et/ou cyclique pour piloter un vérin de soudage, un cycle du procédé présentant des positions variables du piston, des évolutions variables de la vitesse et/ou des pressions variables du vérin,
dans lequel la pression alimentée dans une première chambre de travail (7a) et la pression alimentée dans une seconde chambre de travail (7b) sont commandées séparément l'une de l'autre via des circuits de régulation indépendants, la pression dans l'une des deux chambres de travail étant maintenue constante pendant tout le procédé.

8. Procédé pour piloter une pince porte-électrodes pourvue d'un entraînement linéaire programmable (1) selon la revendication 7, **caractérisé en ce que** la pression de la première chambre de travail (7a) du vérin est maintenue constante pendant tout le procédé.

9. Procédé pour piloter une pince porte-électrodes pourvue d'un entraînement linéaire programmable (1) selon la revendication 8, **caractérisé en ce que** lors d'une course complète ou lors de plusieurs courses partielles du piston de travail (8), on maintient constante la pression dans celle des chambres de travail (7) qui présente le plus grand volume au début de la course en cours d'exécution.

10. Procédé pour piloter une pince porte-électrodes pourvue d'un entraînement linéaire programmable (1) selon les revendications 8 et 9, **caractérisé en ce que** le procédé ou un cycle du procédé comprend les étapes suivantes :
on pose les électrodes de soudage sur les composants à souder,
on met sous précontrainte les composants,
on soude les composants et on ouvre la pince,
et quant à la régulation on sélectionne parmi plusieurs types de fonctionnement comprenant
la régulation de la position,
la régulation de la vitesse et
la régulation de la force.

11. Procédé pour piloter une pince porte-électrodes pourvue d'un entraînement linéaire programmable (1) selon l'une des revendications 8 à 10, **caractérisé en ce qu'**à l'intérieur d'un cycle du procédé, on change entre les différents types de fonctionnement.

12. Procédé pour piloter une pince porte-électrodes pourvue d'un entraînement linéaire programmable (1) selon l'une des revendications 8 à 11, **caractérisé en ce que** l'étape du procédé qu'est la pose est régulée au moyen de la régulation de position.

13. Procédé pour piloter une pince porte-électrodes pourvue d'un entraînement linéaire programmable (1) selon l'une des revendications 8 à 12, **caractérisé en ce que** l'étape du procédé qu'est la précontrainte est régulée au moyen de la régulation de vitesse.

14. Procédé pour piloter une pince porte-électrodes pourvue d'un entraînement linéaire programmable (1) selon l'une des revendications 8 à 13, **caractérisé en ce que** l'étape du procédé qu'est le soudage est régulée au moyen de la régulation de force.
